# EUROPÄISCHE PATENTANMELDUNG

(11) **EP 1 510 413 A1**
(43) Veröffentlichungstag der Anmeldung: **02.03.2005**
(21) Anmeldenummer: 04014855.3
(22) Anmeldetag: 24.06.2004
(51) Int. Cl.: B60R 21/16

(54) **Gassackmodul für ein Fahrzeuginsassen-Schutzsystem**

(30) Priorität: 28.08.2003 DE 20313367 U
(71) Anmelder: TRW Automotive Safety Systems GmbH, 63743 Aschaffenburg (DE)
(72) Erfinder: Helmstetter, Matthias, 63743 Aschaffenburg (DE)
(74) Vertreter: Strass, Jürgen

(57) **Zusammenfassung**

Ein Gassackmodul für ein Fahrzeuginsassen-Schutzsystem umfaßt einen Gassack (12) mit wenigstens einer Abströmöffnung (20) und eine Modulabdeckkappe (14) mit wenigstens einem Abschnitt (16), der bei Entfaltung des Gassacks (12) aufgeklappt wird. Die Abströmöffnung (20) ist in einem Bereich gebildet, der im entfalteten Zustand des Gassacks (12) dem aufgeklappten Abschnitt (16) der Abdeckkappe (14) gegenüberliegt.

## Beschreibung

Die Erfindung betrifft ein Gassackmodul für ein Fahrzeuginsassen-Schutzsystem, wobei das Gassackmodul einen Gassack mit wenigstens einer Abströmöffnung und eine Modulabdeckkappe mit wenigstens einem Abschnitt umfaßt, der bei Entfaltung des Gassacks aufgeklappt wird.

Bei herkömmlichen Fahrer-Gassackmodulen werden zur Vermeidung von Brandverletzungen des Fahrzeuginsassen Abströmöffnungen im Gassack so angeordnet, daß nach der Befüllung des Gassacks (insbesondere beim Auftreffen des Insassen auf den Gassack) ein Abströmen des heißen Füllgases entweder direkt in das Gassackmodul oder in den freien Bereich zwischen Gassackmodul und Lenkradkranz erfolgt. Bei solchen Gassackmodulen muß ein erhöhter Aufwand betrieben werden, um tatsächlich in allen Lenkradstellungen eine Brandverletzung des Insassen auszuschließen und um mögliche Funktionsbeeinträchtigungen zu vermeiden, die entstehen können, wenn aufgrund der hohen Bauteildichte im Gassackmodul oder der Spaltsituation zwischen Gassackmodul und Lenkradkranz das Gas nicht ungehindert abströmen kann.

Die Erfindung schafft ein Gassackmodul, bei dem ohne großen Aufwand Funktionssicherheit und Schutz vor Brandverletzungen beim Abströmen des Füllgases gewährleistet werden können.

Gemäß der Erfindung ist bei einem Gassackmodul der eingangs genannten Art vorgesehen, daß die Abströmöffnung in einem Bereich gebildet ist, der im entfalteten Zustand des Gassacks dem aufgeklappten Abschnitt der Abdeckkappe gegenüberliegt. Durch die besondere Anordnung der Abströmöffnung wird das Gas gezielt auf den aufgeklappten Abschnitt der Abdeckkappe geleitet, wodurch ein kontrolliertes, dosiertes Abströmen des Füllgases ermöglicht wird. Da das abströmende Gas zunächst auf den aufgeklappten Abschnitt der Abdeckkappe trifft, ist das Brandverletzungsrisiko für den Insassen minimiert.

Vorzugsweise weist der aufklappbare Abschnitt einen Scharnierbereich auf. Diese Ausgestaltung hat den Vorteil, daß durch eine entsprechende Ausbildung des Scharnierbereichs, insbesondere durch die Einstellung der Steifigkeit, das dynamische Abströmverhalten gezielt beeinflußt werden kann.

Die Ausbildung wenigstens des Scharnierbereichs des aufklappbaren Abschnitts aus Kunststoff trägt zur Verbesserung der Rückhaltewirkung des Gassacks auch bei extremen Temperaturbedingungen bei, da das Abströmverhalten automatisch durch die temperaturabhängige Eigensteifigkeit des Kunststoffs in gewünschter Weise gesteuert wird. So ist bei sehr niedrigen Temperaturen, bei denen die Gasgeneratorleistung merklich verringert ist, der Kunststoff des Scharnierbereichs so steif, daß der Abschnitt eine weniger weit aufgeklappte Stellung einnimmt und damit die Abströmöffnung in größerem Maße abdeckt. Dadurch verbleibt das Füllgas länger im Gassack und ein verfrühter Druckabbau im Gassack wird vermieden. Umgekehrtes gilt für das Abströmverhalten bei extrem hohen Temperaturen, bei denen durch das weitere Aufklappen des Abschnitts ein schnelleres Abströmen des Füllgases zur Vermeidung eines übermäßig hohen Gassackinnendrucks ermöglicht wird.

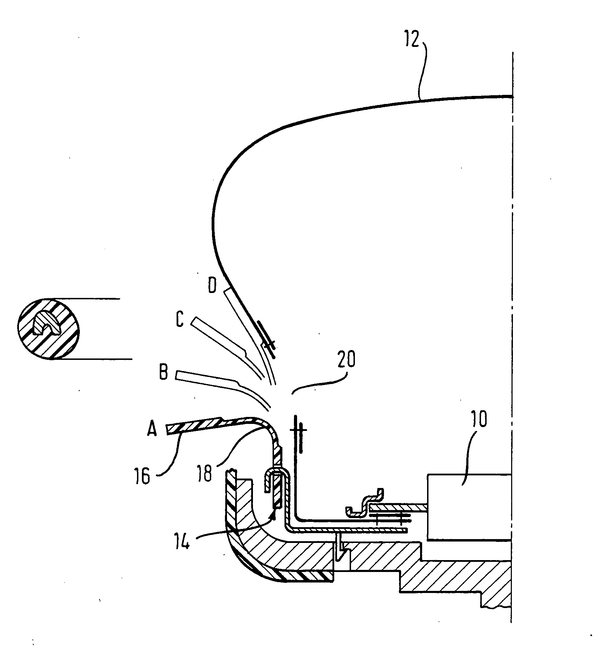

Weitere Merkmale und Vorteile der Erfindung ergeben sich aus der nachfolgenden Beschreibung eines Ausführungsbeispiels und aus der beigefügten Zeichnung, auf die Bezug genommen wird. In der Zeichnung zeigt die einzige Figur eine Hälfte eines erfindungsgemäßen Gassackmoduls mit entfaltetem Gassack in Schnittansicht.

Das in der Figur dargestellte Gassackmodul umfaßt einen Gasgenerator 10, mit dem ein Gassack 12 befüllt werden kann, und eine Modulabdeckkappe 14 aus Kunststoff. Die Abdeckkappe 14 weist in bekannter Weise aufklappbare Abschnitte 16 auf, die lösbar miteinander verbunden sind, damit sich der Gassack 12 aus dem Modul heraus entfalten kann. Das Aufklappen der Abdeckkappe 14 wird durch Scharnierbereiche 18 der Abschnitte 16 ermöglicht, die eine geringere Materialdicke aufweisen (""Scharnierung" der Abdeckkappe 14). Der Gassack 12 weist seitliche Abströmöffnungen 20 auf, die - bezogen auf den entfalteten Zustand des Gassacks 12 - jeweils in Bereichen des Gassacks 12 angeordnet sind, die den Abschnitten 16, insbesondere deren Scharnierbereichen 18 gegenüberliegen.

Wenn bei Bedarf der Gassack 12 mit dem vom Gasgenerator 10 bereitgestellten Gas befüllt wird, öffnet sich die Modulabdeckkappe 14, indem die Abschnitte 16 zur Seite aufgeklappt werden. Dabei kommt es zunächst zu einem Überschwingen der Abschnitte 16 bis zu einer in der Figur mit A bezeichneten Stellung, in der keine Abdeckung der Abströmöffnungen 20 durch die aufgeklappten Abschnitte 16 gegeben ist. Je nachdem, wie steif die Scharnierbereiche 18 ausgebildet sind, bewegen sich die Abschnitte 16 dann mehr oder weniger zurück (Stellungen B, C), gegebenenfalls bis zur Anlage an die Wandung des Gassacks 12 (Stellung D). Jeder Abschnitt 16 wirkt somit als eine Art Ventil für das durch die Abströmöffnungen 20 entweichende Gas, wobei der Grad der Abdeckung der Abströmöffnungen 20 und damit der Widerstand, der dem abströmenden Gas entgegengesetzt wird, von der Steifigkeit der Scharnierbereiche 18 abhängt. Dies führt zu einem dynamischen Abströmen, wobei das aus dem Gassack 12 austretende, noch heiße Gas zunächst auf die Abschnitte 16 trifft, bevor es sich weiter im Raum verteilt.

## Patentansprüche

1. Gassackmodul für ein Fahrzeuginsassen-Schutzsystem, wobei das Gassackmodul einen Gassack (12) mit wenigstens einer Abströmöffnung (20) und eine Modulabdeckkappe (14) mit wenigstens einem Abschnitt (16) umfaßt, der bei Entfaltung des Gassacks (12) aufgeklappt wird, **dadurch gekennzeichnet, daß** die Abströmöffnung (20) in einem Bereich gebildet ist, der im entfalteten Zustand des Gassacks (12) dem aufgeklappten Abschnitt (16) der Abdeckkappe (14) gegenüberliegt.

2. Gassackmodul nach Anspruch 1, **dadurch gekennzeichnet, daß** der aufklappbare Abschnitt (16) einen Scharnierbereich (18) aufweist.

3. Gassackmodul nach Anspruch 2, **dadurch gekennzeichnet, daß** wenigstens der Scharnierbereich (18) des aufklappbaren Abschnitts (16) aus Kunststoff gebildet ist.

4. Gassackmodul nach Anspruch 2 oder 3, **dadurch gekennzeichnet, daß** die Abströmöffnung (20) dem Scharnierbereich (18) gegenüberliegt.

5. Gassackmodul nach Anspruch 4, **dadurch gekennzeichnet, daß** der aufklappbare Abschnitt (16) im entfalteten Zustand des Gassacks (12) an einer Wandung des Gassacks (12) anliegt.
